# EUROPEAN PATENT SPECIFICATION

(11) **EP 2 893 046 B1**
(45) Date of publication and mention of the grant of the patent: **22.06.2016**
(21) Application number: 13750677.0
(22) Date of filing: 09.08.2013
(51) Int. Cl.: C21B 3/08

(54) **DRY SLAG GRANULATION SYSTEM**
GRANULIERUNGSSYSTEM FÜR TROCKENE SCHLACKEN
SYSTÈME DE GRANULATION DE LAITIER À SEC

(30) Priority: 06.09.2012 GB 201215915
(43) Date of publication of application: 15.07.2015
(73) Proprietor: Primetals Technologies, Limited, London EC1A 2DY (GB)
(72) Inventor: MCDONALD, Ian, Middlesbrough TS7 9AR (GB)
(74) Representative: Metals@Linz
(86) International application number: PCT/EP2013/066703
(87) International publication number: WO 2014/037188

(56) References cited:
- JP-A- 2005 226 939
- US-A- 4 180 250
- US-A- 5 259 861

## Description

This invention relates to a dry slag granulation system and method of operation.

The slag material may be metal based, such as iron; a metal oxide, such as titanium oxide; a non-metal, such as slag generated as a by-product of a metals production process; or a mixture thereof

Dry slag granulation is a relatively undeveloped technology which uses a rotary atomiser, typically a spinning cup or dish, to convert molten slag (for example obtained as a by-product of iron making in a blast furnace) into granules, without the addition of water to cool and harden the slag. Examples of dry slag granulation apparatus and methods are given in GB2148330, EP0605472 and EP0804620. The molten slag from the blast furnace is supplied to a dry slag granulation device for granulation, either onto the centre of the cup, or disc, or on an annulus concentric with the centreline of the cup or disc, as in GB840632, in order to add air to the granulate through the centre of the annulus and the rotary atomiser granulator ejects molten globules which pass through an enclosure and are partially frozen to form granules. A spray of these granules is emitted over the 360° circumference of the rotary atomiser and the granules are collected in a trough at the base of the atomiser. As a result it is difficult to install the slag granulation plant close to the blast furnace cast house, so the molten slag must be transported over a long distance before granulation and the plant has a large footprint. For a 20m diameter plant, the pouring point of the molten slag is 10m into the granulation plant.

It is known from other granulation devices such as that of US5259861 that the characteristics of the granulation can be influenced by changing the relative distance between the atomiser and the pouring spout. As described in our co-pending patent application WO2013030016 it is possible to limit the scatter of granulate to a more limited spray angle using an eccentric drop point onto a rotating disc.

In accordance with a first aspect of the present invention a dry slag granulation system comprises a slag granulation housing forming an opening; a slag supply inlet; a directional granulator to receive the slag from the inlet for granulation; a sensor directed at a region of the opening; and a controller for controlling relative movement of the slag supply inlet and the directional granulator in response to signals received from the sensor.

Preferably, the sensor comprises one of an infrared sensor, an optical sensor, or an impact sensor.

The infrared sensor is preferred as it has the advantage that it enables heat density to be monitored.

Relative movement of the slag supply inlet and directional granulator may be achieved by moving both the inlet and the granulator, or by moving one of them and keeping the other one in a fixed position, but preferably the directional granulator is a moveable directional granulator and the slag supply inlet is fixed.

Preferably, the housing further comprises a base, a wall and a roof.

Typically, a rectangular construction is preferred, with four side walls, but other shapes, such as an oval wall, or trapezium may also be used.

Air inlets may be provided in the walls of the housing, but preferably the system further comprises air inlets in a base of the housing.

The system may be provided with one or more air outlets in one or more side walls of the housing, but preferably the system further comprises an air outlet in a roof of the housing.

Preferably, system further comprises a heat recovery mechanism connected to the air outlet.

Preferably, the directional granulator comprises a directional dry slag granulation device, the device comprising a rotary atomising granulator having a centreline axis of rotation; a slag stream feed; and a position controller; wherein a slag stream fall point on the rotary granulator for slag from the slag stream feed is offset from and non-concentric with the centreline axis of rotation of the rotary granulator.

In accordance with a second aspect of the present invention a method of operating a dry slag granulation system comprises positioning a directional granulator beneath a slag supply inlet, supplying slag to the granulator; projecting a slag stream into an opening in a system housing to form a slag stream pattern; defining a region of interest in the opening and a proportion of the region of interest to be covered by an expected slag stream pattern; receiving signals from a sensor indicative of the actual proportion of the region of interest covered by the slag stream pattern; comparing the actual proportion and expected proportion; and controlling relative movement of the directional granulator and slag supply inlet if a result of the comparison falls outside a predetermined range.

Preferably, the method further comprises using one of an infrared sensor, an optical sensor, or an impact sensor to receive signals indicative of the actual proportion of the region of interest covered by the slag stream pattern.

The directional granulator, or the slag supply inlet, or both, may be moved if the comparison of actual proportion and expected proportion fall outside the predetermined range, but preferably the method further comprises keeping the slag supply inlet in a fixed position and moving the directional granulator.

Preferably, the range comprises a difference of between 0% and 10%.

An example of a directional slag granulation system and method of operation according to the present invention will now be described with reference to the accompanying drawings in which:
Figure 1 is a perspective view of a directional slag granulation device suitable for use with the present invention;
Figure 2 is a plan view from above of the device of Fig. 1;
Figure 3 illustrates one embodiment of a system according to the present invention, incorporating the directional slag granulation device of Figs. 1 and 2;
Figure 4 shows a side elevation of the system of Fig.3;
Figure 5 is a plan view, illustrating an example of granulate spread in the system of Fig.3 for a first position of the granulation device;
Figure 6 is a plan view, illustrating an example of granulate spread in the system of Fig.3 after moving the granulation device to a second position;
Figure 7 is a flow diagram of a method of operating dry slag granulation system according to the invention;
Figure 8 shows a side elevation of an alternative embodiment of a system according to the present invention, using an array of impact sensors;
Figures 9a, 9b and 9c illustrate an example of the invention in which there is relative movement of the slag inlet with respect to the granulation device; and,
Figures 10a and 10b illustrate up and down movement of the slag supply inlet 42.

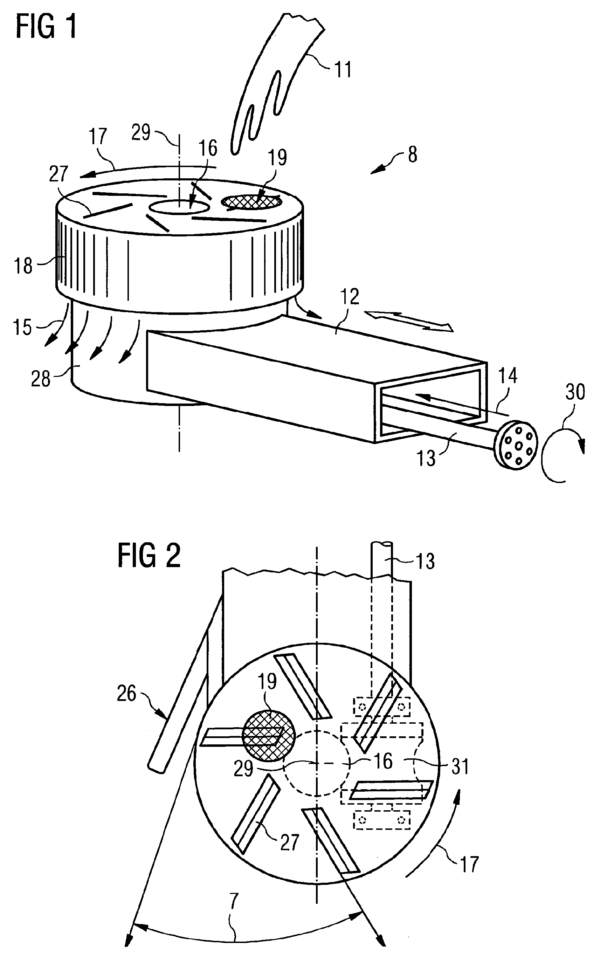

The present invention relates to a system comprising a directional dry slag granulation device. One example of a directional dry slag granulation device is described in our co-pending patent application no WO2013030016 and illustrated in Figs. 1 and 2. However, the system may be useful with other designs of directional dry slag granulation device and the invention is not limited to the specific one described. A rotary granulator 8 is illustrated in Fig.1. A housing 18 supports a plate, which may be provided with raised sections 27, angled about a central rotatable drive shaft 16. The granulator may also be provided with cooling air vents 15 in a support 28 for the plate housing 18. A drive shaft 16 is moveable by an actuator 12, illustrated as a moveable lance connected to the support 28. The lance 12 is configured as a hollow guide through which air blast 14 can be directed to provide the cooling air to the rotary granulator and which can also accept a second drive shaft 13 for rotation 30, which is coupled to the drive shaft 16 to cause rotation of the rotary granulator. A slag fall spot 19 is off-set from the centreline axis of rotation 29 of the granulator plate and non-concentric with the axis and the direction of rotation 17 is indicated. The granulated slag is then projected in a direction indicated 7. If the slag were deposited in an annular fashion, then the directional control achieved by offsetting a single fall point from the centreline could not be achieved and slag granulate would be projected over 360 degrees in the same way as if it had been dropped onto the centre of the rotating disc.

From Fig.2, it can be seen that the drive shaft 16 is coupled to the second drive shaft 13 through coupling 31. The slag fall point 19 is at a position off-set from the centreline 29 of the rotary granulator disc 30. A deflector plate 26 may be provided to one side of the rotary granulator and this allows control of the directional distribution of granulated slag from the rotating disc. When the slag falls on the plate of the rotary granulator, any friction between the slag and the plate causes the slag to move to the edge of the plate. To prevent the slag simply pooling at the fall point, the raised sections assists this process. If the process works correctly, the deflector plate is not required. However, the advantage of the deflector plate is that it acts as a back wall, so that any granulated slag which does not go in the correct direction will land on the deflector plate and if required, the complete lance, granulator, deflector can be removed for cleaning, rather than having to send personnel into the enclosure to clean it..

The directional slag granulator allows the slag pouring point to be at the side wall rather than the centre of the granulator, so reducing the overall footprint. The lance enables the disc to be moved in and out of the stream to ensure a constant direction of throw and when required, the disc can be changed for maintenance away from the danger area. Movement of the disc in and out of the stream is in response to a position sensor detecting the fall point of the slag from the slag runner and comparing the actual fall point with the expected fall point. If the fall point is too close to the centreline, then the distribution of the slag is broader and less directional.

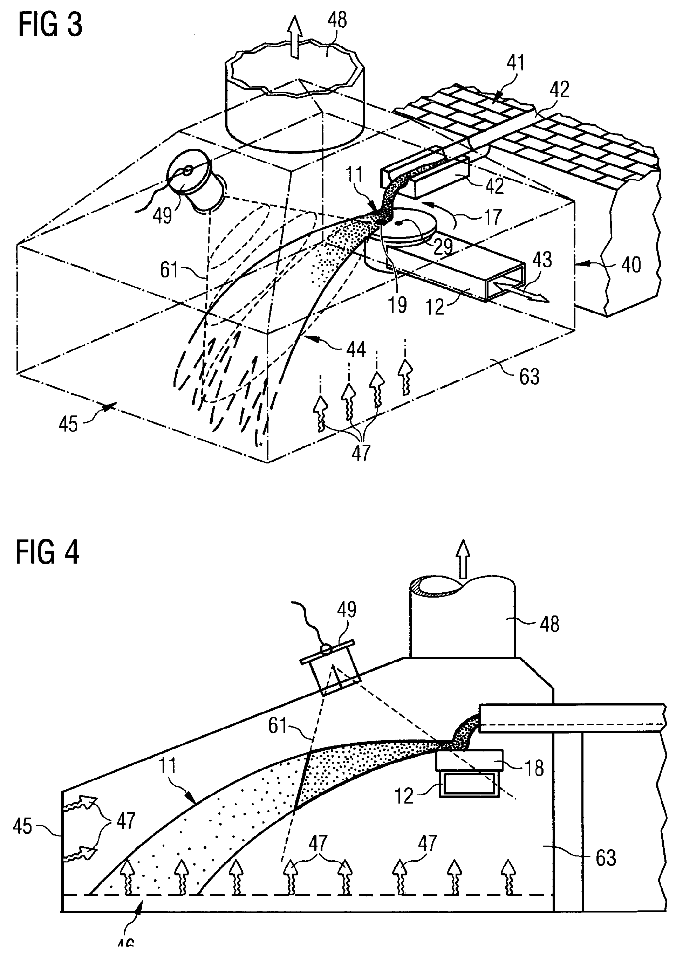

However, environmental concerns mean that as well as granulating slag, it is desirable to be able to recover heat from the process and this heat recover should be as efficient as possible. A first example of a system of the present invention is illustrated in Fig.3. A system housing 40 is constructed next to the cast house and a slag runner 66 in the cast house floor 41 extends as slag supply inlet 42 into the system housing 40. The directional dry slag granulation device 8 is installed beneath an outlet of the slag supply inlet 42, for rotation 17. Movement of the lance 12 as indicated by the arrow 43 changes the position of the slag fall point 19. The slag flow 11 is projected into an opening in the housing as indicated 44 after impact on the rotating disc and hits a wall 45 or floor 46 at the far end of the system housing. The floor 46 may be a fluidised bed and the housing may be provided with cooling air ducts 47, either in the floor 46 or the end and side walls 45, 63 or in both. An air off-take 48 maintains the flow of air through the system housing and heated air which has passed through the granulated slag flow is passed to a heat recovery mechanism (not shown). A proportion of the heat generated during the dry slag granulation process is then captured in the heat recovery process.

In order to optimise the system housing for heat recovery, it is desirable that the rotating granulator is correctly positioned beneath the slag runner outlet. Although use of a position sensor as described in WO2013030016 helps to keep the fall spot at its preset position and compensate for small scale movement or vibration which might have moved it out of alignment, this does not address the need to optimise the system housing for heat recovery. To assist in this, a sensor is provided. In the example described with respect to Figs.3 to 7, the sensor is an infrared camera 49, provided in the system housing, but other types of sensor may be used. In a preferred embodiment, the camera is positioned on an upper wall, or roof, of the system housing and looks down upon an area 61 encompassing the edge of the disc remote from the slag runner and a portion of the housing in the desired projection direction. Alternatively, the camera may be suspended from the roof, or mounted on a gantry, or on a side wall, provided that it is able to image the required area of the opening from that position.

For optimising heat recovery, as much as possible of the air flow entering through the ducts 47 passes over the projected slag stream 44, so controlling the actual, rather than expected, slag projection pattern to obtain even coverage of the slag bed formed in a region, or permitted zone, of the opening is important. As the slag is projected from the rotating disc, whether in the correct direction, or the not, at least part of it passes over the fluidised bed 46 and air vents 47, typically building up a slag bed. As the slag is cooled 58, heat is transferred to the process air flowing past 59. The heated air is extracted through air off-take 48 and passed 60 to the heat recovery facility. However, when the fall pattern is outside the permitted zone, the slag fall pattern includes only a limited section of the air vents and fluidised bed. The infrared camera monitors the spread pattern of the molten slag emerging from the rotating cup and provides the basis for moving the rotating disc carrying lance to the exact position required to make full use of the space allocated for the heat recovery system. The heat density emitted from the falling slag which is monitored by the camera is related to the slag flow rate and therefore may also be used to optimise the rotation speed of the disc.

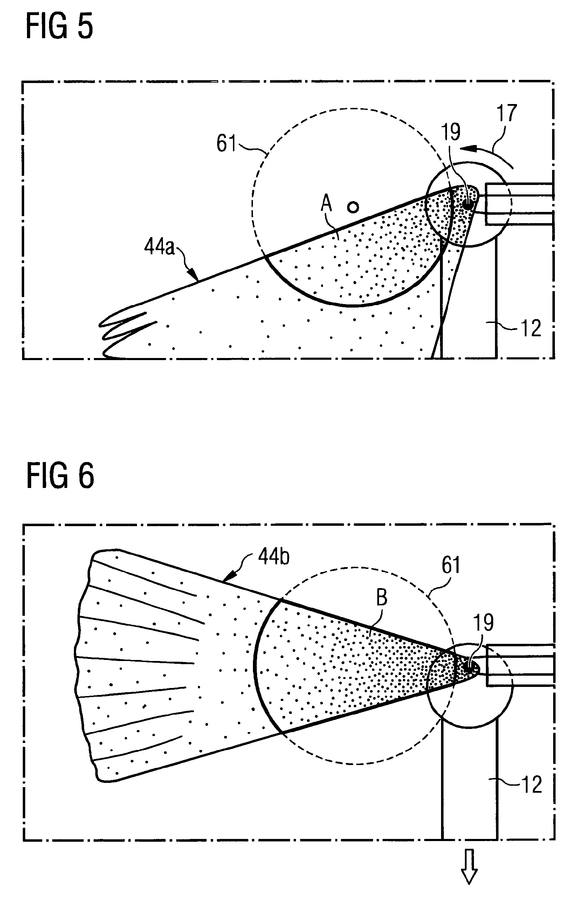

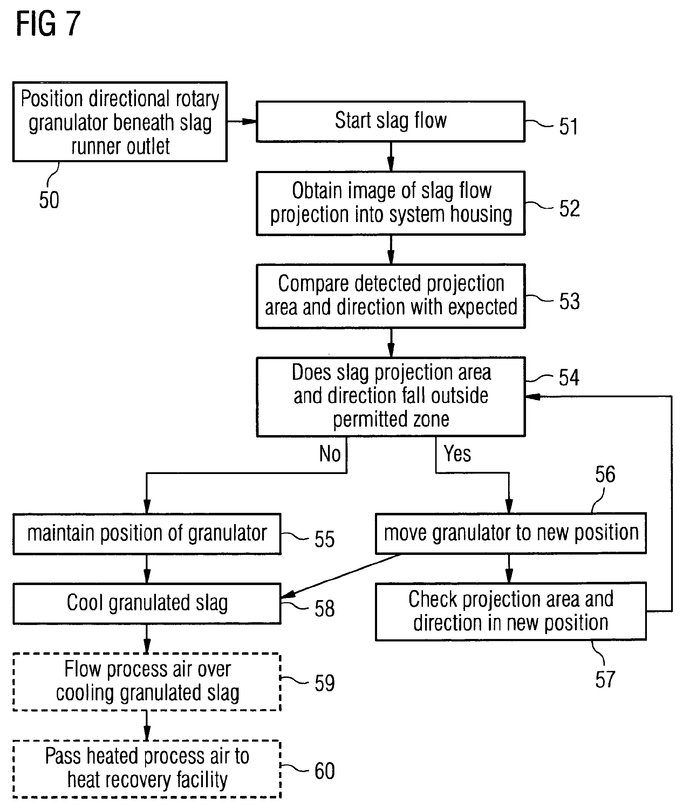

As illustrated by Fig.7, operation of the system involves positioning 50 the granulator 8 beneath the outlet of the slag supply inlet 42 in a start position which may be predetermined based on expected flow rate and desired direction of projection of the granulated slag. Initiating 57 the flow of slag and obtaining 52 an image, or series of images, using the infrared camera 49. An expected slag projection pattern for a given flow rate of slag and rotational speed of the granulator and impact point 19 on the disc may be derived in advance and the actual slag projection pattern measured by the camera is compared 53 with this expected pattern. If the result 54 of the comparison is that part of the pattern 44a of slag projection are and direction falls outside a permitted zone, e.g. as shown in Fig.5, where most of the slag is over one side of a centre point 62 of the imaging zone 61, implying that part of the slag is outside that zone, then the lance 12 is actuated to move 56 the granulator position to one with a fall point which should rectify this error. A further image or images are taken by the camera and a check 57 made of the pattern obtain in the new position. If this pattern 44b does not fall 54 outside the permitted zone, for example as shown in Fig.6, then the granulator is maintained 55 in the new position. If there is still a portion of the pattern outside the zone 61 and if this portion exceeds a permitted tolerance, e.g. greater than 5%, the lance moves 56 the granulator again. Further checks may be made at preset intervals to ensure that there has not been a change in slag fall point either due to a change in flow rate, or unwanted movement of the granulator.

The process is largely automated, with a control processor in a controller receiving the image data, comparing it with stored data and providing control commands to the actuator. However, data derived during operation may also be relayed to an operator at a monitoring station at a safe remote position. This may also include a facility for the operator to enter set up and reference data for the controller.

Thus, the directional dry slag granulator described above is improved by monitoring the atomized slag scatter pattern and controlling the lance to ensure the spread pattern for the molten granulate and its flow density are optimised. The controlled distribution means that the walls of the system housing can be brought inwards through the area where granulated slag will not be distributed, resulting in a significant reduction in the overall size of the granulator. The system housing is typically rectangular, improving on prior non-directional systems which needed a circular wall and a long slag runner at least the radius of the circle. However, other shapes such as a stretched oval or trapezium shaped housing may also be used to obtain the benefit of a drop point close to the cast house and a reduced overall footprint.

The infrared sensor described above may be replaced by an optical sensor in the same position. The optical sensor is able to provide an image of the coverage of the projected slag stream and this is then compared with a required coverage for acceptably efficient heat recovery. The principles of operation and comparison of the expected and actual slag projection pattern are generally the same as described with respect to the infrared camera example of Figs.3 to 7 and will not be repeated here. However, the optical sensor is not able to determine the heat density emitted from the falling slag, so unlike the use of an infrared camera described above, an optical sensor does not have the same benefit of being useful to optimise the rotation speed of the disc.

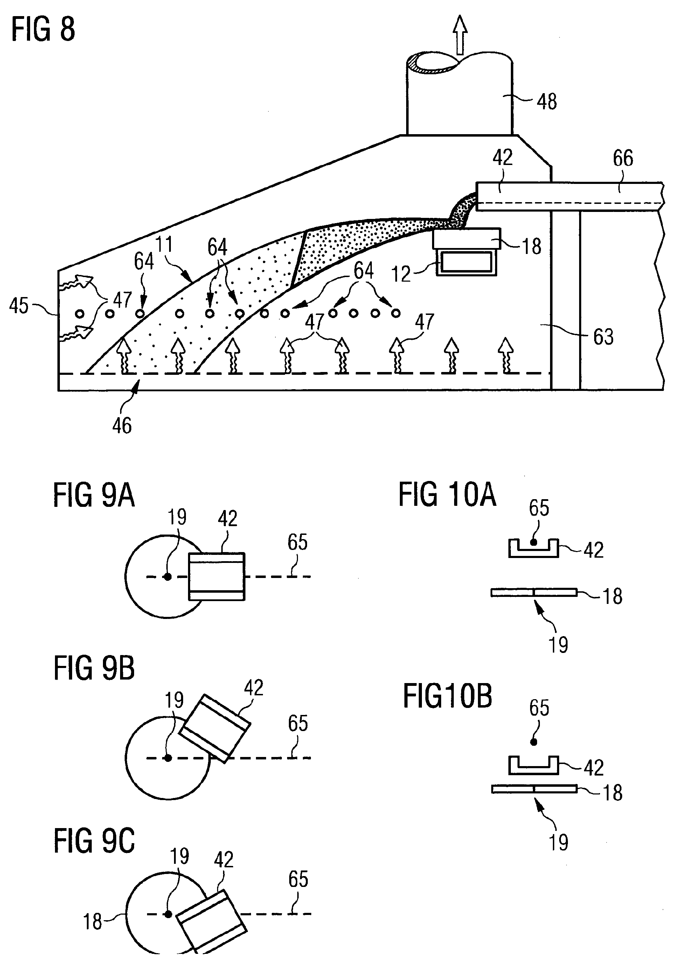

In an alternative embodiment, shown in Fig.8, rather than using an infrared sensor to determine the slag projection pattern, an impact sensor is used. The impact sensor comprises an array of sensors 64 on a grid distributed across the system housing at a sufficient height above the base and air inlets 46, so that a bed of granulated slag forms between the base and the grid. It is desirable that the bed should form as evenly as possible, to prevent the air from passing through via a preferential path in a region where the bed is thinner than in other regions. The further that the slag flies through the housing before it forms a bed, the better it will solidify, so a long, narrow flight path is preferable to a short, wide one, with a slag bed formed in a permitted zone towards the furthest extent of the opening in the housing. Practical constraints will determine the available space for the bed to be formed and this information may be used as the basis for setting which impact sensors are within the desired area for the bed to form and which sensors are outside. Signals from the array of impact sensors are used to determine whether or not the actual projected slag stream is achieving the desired even coverage. From comparison of pre-stored data on the expected impact region for the slag stream projected through the housing over the air vents and fluidised bed, then the relative position of the directional granulator 18 and the slag supply inlet 42 may be adjusted accordingly.

If the bed of granulated slag is simply projected and allowed to build up, another way of detecting whether the bed is even is to monitor the depth of the bed in the desired area and adjust the relative position of the directional granulator and the slag supply inlet, so that regions with insufficient coverage receive more slag to compensate. The depth of the slag bed may be detected using radar level sensing of the top surface of the bed, or laser scanning of the top surface (not shown).

For the examples given above, the assumption has been that the slag supply inlet 42 is fixed in position and the directional granulator 18 is moved on its lance 12 in order to correct any determined difference in expected projected slag stream position and the actual projected slag stream position. However, there are alternatives which may also be used. In one embodiment, the directional granulator is installed in a fixed position and the slag supply inlet 42 is movable. This may be achieved using a tiltably mounted tundish (not shown), with one or more outlets, one of which is used at any time according to where on the rotating disc the slag flow is required. In another example, both the directional granulator and the slag supply inlet are able to be moved and the decision on whether to move one or other or both will depend upon the degree and direction of movement required to correct any determined error in the actual projected slag stream. Figs.9a, 9b, 9c, 10a and 10b illustrate movement of the slag supply inlet 42. Assuming a centreline 65 along the length of the slag supply inlet 42 when it is in its fixed position, then movement of the slag supply inlet to one side or other of its fixed position centreline 65 (Figs.9a,9b,9c), or inclining the slag supply inlet (Figs.10a and 10b), so as to increase or reduce the distance of its open end from the centreline 19 of the rotary granulator disc is possible, depending on the type of connection used between the casthouse floor slag runner 66 and the slag supply inlet 42.

In terms of the method of operation as described in Fig.7, instead of steps 55 and 56 being to maintain the position of the granulator or move the granulator to a new position, in the case where the slag supply inlet 42 is also moveable, or is to be moved instead, then step 55 is to maintain the position of the granulator and slag supply inlet and step 56 is to move one or both of the granulator and slag supply inlet to a new position, such that their position relative to one another has been changed. With suitable control, the combination of moving the slag supply inlet along the centreline 65 towards or away from the cast house and moving the lance, which is positioned for movement at right angles to the movement of the slag supply inlet, towards or away from the end of the slag supply inlet, as indicated by arrow 43, then the slag fall point can be adjusted without needing a pivoting joint on the slag supply inlet.

## Claims

1. A dry slag granulation system comprising a slag granulation housing (18) forming an opening (44); a slag supply inlet (42); a directional granulator (8) to receive the slag from the inlet for granulation; a sensor (64) directed at a region of the opening; and a controller for controlling relative movement of the slag supply inlet and the directional granulator in response to signals received from the sensor (64).

2. A system according to claim 1, wherein the sensor (64) comprises one of an infrared sensor, an optical sensor, or an impact sensor.

3. A system according to claim 1 or claim 2, wherein the directional granulator (18) is moveable and the slag supply inlet (42) is fixed.

4. A system according to any preceding claim, wherein the housing (18) further comprises a base, a wall and a roof.

5. A system according to any preceding claim, wherein the system further comprises air inlets (46) in a base of the housing (18).

6. A system according to any preceding claim, wherein the system further comprises an air outlet in a roof of the housing (18).

7. A system according to any preceding claim, wherein the system further comprises a heat recovery mechanism connected to the air outlet.

8. A system according to any preceding claim, wherein the directional granulator (18) comprises a directional dry slag granulation device, the device comprising a rotary atomising granulator (8) having a centreline axis of rotation (29); a slag stream feed; and a position controller; wherein a slag stream fall point (19) on the rotary granulator for slag from the slag stream feed is offset from and non-concentric with the centreline axis of rotation of the rotary granulator.

9. A method of operating a dry slag granulation system, the method comprising positioning a directional granulator (8) beneath a slag supply inlet (42), supplying slag to the granulator; projecting a slag stream (44) into an opening in a system housing (18) to form a slag stream pattern; defining a region of interest in the opening and a proportion of the region of interest to be covered by an expected slag stream pattern; receiving signals from a sensor (46) indicative of the actual proportion of the region of interest covered by the slag stream pattern; comparing the actual proportion and expected proportion; and controlling relative movement of the directional granulator (8) and slag supply inlet (42) if a result of the comparison falls outside a predetermined range.

10. A method according to claim 9, wherein the method further comprises using one of an infrared sensor, an optical sensor, or an impact sensor to receive signals indicative of the actual proportion of the region of interest covered by the slag stream pattern.

11. A method according to claim 9 or claim 10, wherein the method further comprises keeping the slag supply inlet (42) in a fixed position and moving the directional granulator (8).

12. A method according to any of claims 9 to 11 , wherein the range comprises a difference of between 0% and 10%.

## Patentansprüche

1. Trockenschlackegranulationssystem, umfassend ein Schlackegranulationsgehäuse (18), das eine Öffnung (44) bildet; einen Schlackezuführeinlass (42); einen gerichteten Granulator (8) zum Aufnehmen der Schlacke von dem Einlass zur Granulation; einen Sensor (64), der auf einen Bereich der Öffnung gerichtet ist; und eine Steuerung zum Steuern einer relativen Bewegung des Schlackezuführeinlasses und des gerichteten Granulators in Antwort auf von dem Sensor (64) empfangene Signale.

2. System gemäß Anspruch 1, wobei der Sensor (64) eines von einem Infrarotsensor, einem optischen Sensor und einem Aufprallsensor umfasst.

3. System gemäß Anspruch 1 oder Anspruch 2, wobei der gerichtete Granulator (18) beweglich ist und der Schlackezuführeinlass (42) feststehend ist.

4. System gemäß einem der vorstehenden Ansprüche, wobei das Gehäuse (18) ferner eine Basis, eine Wand und ein Dach umfasst.

5. System gemäß einem der vorstehenden Ansprüche, wobei das System ferner Lufteinlässe (46) in einer Basis des Gehäuses (18) umfasst.

6. System gemäß einem der vorstehenden Ansprüche, wobei das System ferner einen Luftauslass in einem Dach des Gehäuses (18) umfasst.

7. System gemäß einem der vorstehenden Ansprüche, wobei das System ferner einen mit dem Luftauslass verbundenen Wärmerückgewinnungsmechanismus umfasst.

8. System gemäß einem der vorstehenden Ansprüche, wobei der gerichtete Granulator (18) umfasst: eine gerichtete Trockenschlackegranulationsvorrichtung, wobei die Vorrichtung einen Drehzerstäubungsgranulator (8) mit einer mittigen Drehachse (29) umfasst; eine Schlackestromzuführung; und eine Positionssteuerung; wobei ein Schlackestrom-Fallpunkt (19) an dem Drehgranulator für die Schlacke aus der Schlackestromzuführung von der mittigen Drehachse des Drehgranulators versetzt und damit nicht konzentrisch ist.

9. Verfahren zum Betreiben eines Trockenschlackegranulationssystems, wobei das Verfahren umfasst: Anordnen eines gerichteten Granulators (8) unter einem Schlackezuführeinlass (42), der dem Granulator Schlacke zuführt; Richten eines Schlackestroms (44) in eine Öffnung in einem Systemgehäuse (18), um eine Schlackestromstruktur zu bilden; Definieren eines Bereichs von Interesse in der Öffnung und eines Anteils des Bereichs von Interesse, der von einer erwarteten Schlackestromstruktur abgedeckt werden soll; Empfangen von Signalen von einem Sensor (46), die für den tatsächlichen Anteil des Bereichs von Interesse, der von der Schlackestromstruktur abgedeckt wird, indikativ sind; Vergleichen des tatsächlichen Anteils und des erwarteten Anteils; und Steuern einer relativen Bewegung des gerichteten Granulators (8) und des Schlackezuführeinlasses (42), wenn das Ergebnis des Vergleichs außerhalb eines vorbestimmten Bereichs liegt.

10. Verfahren gemäß Anspruch 9, wobei das Verfahren ferner die Verwendung eines von einem Infrarotsensor, einem optischen Sensor oder einem Aufprallsensor umfasst, um Signale zu empfangen, die für den tatsächlichen Anteil des Bereichs von Interesse, der von der Schlackestromstruktur abgedeckt wird, indikativ sind.

11. Verfahren gemäß Anspruch 9 oder Anspruch 10, wobei das Verfahren ferner das Halten des Schlackezuführeinlasses (42) in einer feststehenden Position und Bewegen des gerichteten Granulators (8) umfasst.

12. Verfahren gemäß einem der Ansprüche 9 bis 11, wobei der Bereich einen Unterschied von zwischen 0 % und 10 % umfasst.

## Revendications

1. Système de granulation de laitier à sec comprenant un logement de granulation de laitier (18) formant une ouverture (44) ; une entrée d'alimentation en laitier (42) ; un granulateur directionnel (8) pour recevoir le laitier provenant de l'entrée pour la granulation ; un capteur (64) dirigé sur une région de l'ouverture ; et un dispositif de commande destiné à commander un mouvement relatif de l'entrée d'alimentation en laitier et du granulateur directionnel en réponse à des signaux reçus provenant du capteur (64).

2. Système selon la revendication 1, dans lequel le capteur (64) comprend un capteur parmi un capteur infrarouge, un capteur optique ou un capteur de choc.

3. Système selon la revendication 1 ou la revendication 2, dans lequel le granulateur directionnel (18) est mobile et l'entrée d'alimentation en laitier (42) est fixe.

4. Système selon l'une quelconque des revendications précédentes, dans lequel le logement (18) comprend en outre une base, une paroi et un toit.

5. Système selon l'une quelconque des revendications précédentes, dans lequel le système comprend en outre des entrées d'air (46) dans une base du logement (18).

6. Système selon l'une quelconque des revendications précédentes, dans lequel le système comprend en outre une sortie d'air dans un toit du logement (18).

7. Système selon l'une quelconque des revendications précédentes, dans lequel le système comprend en outre un mécanisme de récupération de chaleur raccordé à la sortie d'air.

8. Système selon l'une quelconque des revendications précédentes, dans lequel le granulateur directionnel (18) comprend un dispositif de granulation de laitier à sec directionnel, le dispositif comprenant un granulateur d'atomisation rotatif (8) ayant un axe central de rotation (29) ; une amenée de flux de laitier ; et un dispositif de commande de position ; dans lequel un point de chute de flux de laitier (19) sur le granulateur rotatif pour le laitier en provenance de l'amenée de flux de laitier est décalé et non concentrique par rapport à l'axe central de rotation du granulateur rotatif.

9. Procédé d'exploitation d'un système de granulation de laitier à sec, le procédé comprenant le positionnement d'un granulateur directionnel (8) en dessous d'une entrée d'alimentation en laitier (42), l'acheminement du laitier au granulateur ; la projection d'un flux de laitier (44) dans une ouverture dans un logement de système (18) pour former un modèle de flux de laitier ; la définition d'une région d'intérêt dans l'ouverture et d'une proportion de la région d'intérêt à recouvrir par un modèle de flux de laitier prévu ; la réception de signaux provenant d'un capteur (46) indiquant la proportion effective de la région d'intérêt recouverte par le modèle de flux de laitier ; la comparaison de la proportion effective et de la proportion prévue ; et la commande du mouvement relatif du granulateur directionnel (8) et de l'entrée d'alimentation en laitier (42) si un résultat de la comparaison se trouve en dehors d'une plage prédéterminée.

10. Procédé selon la revendication 9, dans lequel le procédé comprend en outre l'utilisation d'un capteur parmi un capteur infrarouge, un capteur optique ou un capteur de choc pour recevoir des signaux indiquant la proportion effective de la région d'intérêt recouverte par le modèle de flux de laitier.

11. Procédé selon la revendication 9 ou la revendication 10, dans lequel le procédé comprend en outre le maintien de l'entrée d'alimentation en laitier (42) dans une position fixe et le déplacement du granulateur directionnel (8).

12. Procédé selon l'une quelconque des revendications 9 à 11, dans lequel la plage comprend une différence comprise entre 0 % et 10 %.
